# EUROPÄISCHE PATENTSCHRIFT

(11) **EP 3 273 077 B1**
(45) Veröffentlichungstag und Bekanntmachung des Hinweises auf die Patenterteilung: **03.06.2020**
(21) Anmeldenummer: 17181023.7
(22) Anmeldetag: 12.07.2017
(51) Int. Cl.: F16C 19/38, F16C 33/58, F16C 35/063, F16C 35/067, F03D 80/70, F16C 33/60

(54) **WÄLZLAGER MIT MONTAGEFLANSCH**
ROLLING BEARING WITH FLANGE
PALIER À ROULEMENT DOTÉ D'UNE BRIDE DE MONTAGE

(30) Priorität: 21.07.2016 DE 102016213361; 21.07.2016 DE 202016103971 U
(43) Veröffentlichungstag der Anmeldung: 24.01.2018
(73) Patentinhaber: Aktiebolaget SKF, 41 550 Göteborg (SE)
(72) Erfinder: Kristensen, Jonas, 6900 Skjern (DK); Persson, Mats, 1081 JP Amsterdam (NL); Scheibner, Peter, 7100 Vejle (DK); Tanke, Jesko-Henning, 97422 Schweinfurt (DE)
(74) Vertreter: Kuhstrebe, Jochen

(56) Entgegenhaltungen:
- WO-A1-2014/024139
- DE-A1-102009 014 923
- JP-A- 2002 339 985
- JP-A- 2008 031 941
- US-A- 3 589 747
- US-A1- 2002 186 910
- US-A1- 2012 091 725

## Beschreibung

Die vorliegende Erfindung betrifft ein zweireihiges Wälzlager gemäß Anspruch 1, sowie eine Windenergieanlage mit einem derartigen Wälzlager.

Es sind bereits zweireihige Wälzlager bekannt, die sowohl einen gemeinsamen Lagerring für beide Wälzkörperreihen als auch zwei separate Lagerringe für beide Wälzkörperreihen aufweisen. Beispielsweise ist aus der DE 10 2009 014 923 A1 ein zweireihiges Kegelrollenlager bekannt, welches einen einteiligen Außenring mit zwei Laufbahnen aufweist. Der zugehörige Innenring ist zweiteilig ausgebildet, wobei jeder Innenring eine Innenlaufbahn aufweist. Die beiden Wälzkörperreihen welche aus Kegel stumpfartigen Wälzkörper bestehen, wälzen zwischen den Laufbahnen der Innenringe und der jeweiligen Laufbahn des Außenrings ab. Der Außenring weist in einem Bereich radial außerhalb der Laufbahnen Durchgangsbohrungen auf, mit welchen er an einem Maschinenteil wie beispielsweise einem Gehäuse angeschraubt werden kann. Nachteilig bei dieser Konstruktion ist jedoch, dass beim Betrieb des Lagers im eingebauten Zustand in einem Maschinenteil ein thermisches Ungleichgewicht entstehen kann, wodurch eine genaue Positionierung des Außenrings zu den inneren Ringen nicht mehr gegeben ist. Beispielsweise kann die Laufbahn, welche der am Maschinenteil festgelegten Seite des Außenrings gegenüber liegt, stärker thermisch belastet sein, wodurch der Außenring auf der dem Maschinenteil abgewandten Seite wärmer ist als an der Flanschseite zum Maschinenteil. Durch die stärkere Erwärmung kann es vorkommen dass der Außenring auf der abgewandten Seite einen etwas größeren Durchmesser infolge von Wärmedehnung aufweist als auf der Flanschseite, welche zudem über den direkten Kontakt mit dem Masse aufweisenden Maschinenteil durch Wärmeübertragung eine geringere Temperatur aufweist. Durch diese ungleichmäßige Wärmeverteilung im Außenring kann dieser durch größere radiale Ausdehnung der nicht festgelegten Seite Verkippen. Hierdurch liegt keine gleichmäßige Belastung der beiden Wälzkörperreihen mehr vor, was nachteilig für einen sicheren Betrieb ist und die Lebensdauer verkürzt.

Weiterhin ist aus der WO 2014/024139 A1 ein zweireihiges Kugellager bekannt, welches einen einteiligen Außenring mit zwei Laufbahnen und mit einem sich radial erstreckenden integralen Montageflansch aufweist, wobei die in Richtung der gegenüberliegenden Laufbahn versetzte axiale Anlagefläche mit dem Außenring einen Absatz bildet, wobei das Lager mittels Durchgangsöffnungen im Montageflansch am Gehäuse festgeschraubt ist.

Aus der US 2002/186910 A1 ist ein zweireihiges Schrägkugellager eines Getriebes bekannt, welches an seinem Außenring einen integralen, Durchgangsöffnungen aufweisenden, axial versetzen Montageflansch aufweist.

Aufgabe der Erfindung ist es, ein zweireihiges Wälzlager zu schaffen, welches an einem Maschinenteil axial festgelegt ist, wobei das Lager gegen nachteilige Verformungen durch Wärmeausdehnung im Betrieb zuverlässig geschützt werden soll.

Zur Lösung dieser Aufgabe ist ein Wälzlager gemäß Anspruch 1 und eine Windenergieanlage nach Anspruch 7 vorgesehen. Erfindungsgemäß umfasst das Wälzlager mindestens einen Innenring und mindestens einen Außenring und zwei Reihen von Wälzkörpern, die zwischen einer ersten und einer zweiten Laufbahn des mindestens einen Innenrings und einer ersten und einer zweiten Laufbahn des mindestens einen Außenrings abwälzen, und einem Gehäuse wobei der Außenring einteilig ausgebildet ist und einen sich radial erstreckenden integralen Montageflansch mit einer sich radial erstreckenden auf der Seite des Gehäuses ersten axialen Anlagefläche aufweist, wobei im Montageflansch axial erstreckende Durchgangsöffnungen zum axialen Befestigen des Außenrings an einer radialen Gegenanlagefläche des Gehäuses angeordnet sind, wobei der den Montageflansch aufweisende Außenring auf der Seite der ersten axialen Anlagefläche einen Absatz aufweist, sodass die erste axiale Anlagefläche des Montageflansches bezüglich einem äußeren axialen Endes der ersten Laufbahn dieses Außenrings axial um 10% bis 50% der Gesamtbreite G der Laufbahnen nach innen in Richtung der zweiten Laufbahn dieses Außenrings versetzt ist. Hierbei liegen die erste Laufbahn und die erste axiale Anlagefläche auf derselben Seite des Wälzlagers, die zweite Laufbahn auf der gegenüberliegenden Seite. Eine besonders bevorzugte Ausgestaltung sieht vor, dass die erste axiale Anlagefläche um 20 % bis 40 % der Gesamtbreite G der Laufbahnen nach innen in Richtung der zweiten Laufbahn dieses Außenrings versetzt ist. Die Gesamtbreite G der Laufbahnen ist als axialer Abstand der gegenüberliegenden äußeren axialen Enden der Laufbahnen bestimmt. Erfindungsgemäß liegt das Verhältnis von Außendurchmesser D des Montageflansches zur Gesamtbreite G der Laufbahnen in einem Bereich von 5:1 bis 25:1. Es hat sich herausgestellt, dass in diesem Verhältnisbereich, welcher ein Wälzlager beschreibt, welches bezüglich des Durchmessers einen sehr kleinen Abstand der beiden Wälzlagerreihen hat, die Anordnung eines Absatzes am den Montageflansch aufweisenden Lagerring besonders vorteilhaft ist. Höchstvorzugsweise liegt das Verhältnis des Außendurchmessers D des Montageflansches zur Gesamtbreite G zwischen 14 und 16 Erfindungsgemäß liegt der zylindrische Außenumfangsflächenbereich im montiertem Zustand des Lagers nicht am Gehäuse an.

Ein Ausführungsbeispiel des Wälzlager sieht vor, dass der Außendurchmesser D des Montageflansch des Wälzlager größer 100 cm ist höchst vorzugsweise größer 200 cm.

Ein erfindungsgemäßes Ausführungsbeispiel sieht vor, dass das Wälzlager als zweireihiges Kegelrollenlager in O-Anordnung ausgebildet ist.

Vorzugsweise ist hierbei vorgesehen, dass der Innenring als zweiteiliger Innenring ausgebildet ist, welcher die Innenringe aufweist wobei jeder der Innenringe eine Laufbahn hat. Vorteilhaft hierbei ist, dass sich dann die Anlagefläche des Montageflansches in Richtung der Mitte der beiden Kegelrollenreihen verschiebt, wodurch der Abstand der Anlagefläche zu der der Anlagefläche gegenüberliegenden Laufbahn reduziert wird. Ein verbesserter Wärmeübergang von Bereichen des Außenrings in der Nähe der abgewandten Laufbahn über die Anlagefläche in das Gehäuse wird hierdurch ermöglicht. Im Betrieb wird durch die versetzte Anlagefläche eine gleichmäßigere Wärmeverteilung im Außenring ermöglicht. Weiterhin wird der wirksame Hebelarm zwischen der Anlagefläche und einem äußeren axialen Ende der axial gegenüberliegenden Laufbahn des Außenringes verringert.

Alternativ sieht eine erfindungsgemäße Ausführungsform vor, dass anstelle von kegelförmigen Wälzkörpern tonnenförmige Wälzkörper angeordnet sind. Die beiden Laufbahnen des Außenringes sind dann entsprechend konvex ausgebildet. Die beiden Laufbahnen der beiden Innenringe sind ebenfalls konvex ausgebildet, wobei die beiden Laufbahnen der Innenringe auf einer gemeinsamen Kugelsphäre angeordnet sein können. Das Wälzlager ist hierbei vorzugsweise als zweireihiges Tonnenrollenlager in O-Anordnung ausgebildet.

Eine besonders bevorzugte Ausbildung sieht vor, dass der Außenring auf beiden axialen Seiten einen Absatz aufweist, wobei die der Anlagefläche gegenüberliegende zweite Seite des Montageflansch um 10 % bis 40 % der Gesamtbreite G der Laufbahnen nach innen in Richtung der ersten Laufbahn versetzt ist. Vorteilhaft hierbei ist, dass dadurch der Montageflansch eine weitaus geringere axiale Breite B aufweist als die Gesamtbreite G der Laufbahnen. Bei Verwendung von Schraubenverbindungen zur Festlegung des Außenringes am Gehäuse können hierbei wesentlich kürzere Schrauben verwendet werden als bei einer Verbindung mittels eines Montageflansches, welcher genauso breit ist wie die Gesamtbreite der Laufbahnen. Weiterhin vorteilhaft ist, dass der axial äußere Bereich Laufbahn, welcher radial innerhalb des zweiten Absatzes angeordnet ist, durch den nach innen versetzten Montageflansch zumindest bereichsweise außerhalb des axialen Bereichs der Schraubenverbindung liegt. Als erster Absatz ist hierbei der Absatz auf der Seite der ersten axialen Anlagefläche benannt, als zweiter Absatz ist hierbei der der ersten Anlagefläche gegenüberliegende Absatz definiert, von welchem aus die Schrauben durch die Durchgangsöffnungen gesteckt und der Montageflansch am Gehäuse angeschraubt werden kann.

Vorteilhaft hierbei ist, dass Radialkräfte, welche von den Wälzkörper über die Laufbahnen auf den Außenring wirken, an den beiden axialen Enden einen stark verminderten Einfluss auf die Schraubenverbindung haben, da durch die axialen Absätze keine direkte radiale Materialverbindung in diesem Axialbereich der Laufbahnen mit dem die Schraubenverbindung aufnehmendem Montageflansch besteht. Der Außenring kann sich somit im Bereich der Absätze radial aufweiten, ohne dass der Montageflansch und damit die Schraubenverbindung diese Vergrößerung des Durchmesser zwangsläufig mitmachen. Vorzugsweise ist im Bereich des ersten Absatzes auf der Seite der ersten axialen Anlagefläche ein Luftspalt, welcher als Ringspalt ausgebildet ist, zwischen dem Gehäuse und dem Außenring ausgebildet. Eine betriebsbedingte wärmebedingte Aufweitung des Innenringes, welche eine Durchmesservergrößerung des Innenringes zur Folge hat kann somit durch die erfindungsgemäße Anordnung der Absätze am Außenring durch den Außenring selbst kompensiert werden, ohne dass dies einen nachteiligen Effekt auf die Schraubenverbindung hat; beispielsweise wird somit ein einseitiges Aufweiten des Außenrings auf der dem Gehäuse gegenüberliegenden Seite und ein daraus resultierendes Verkippen des Außenringes gegenüber den Innenringen wirkungsvoll verhindert.

Ein bevorzugtes Ausführungsbeispiel sieht vor, dass die axiale Breite B des Montageflansches im Bereich der Durchgangsöffnungen mindestens 30% der Gesamtbreite der Laufbahnen beträgt. Durch diese Mindestbreite B des Montageflansches ist sichergestellt, dass einerseits die Laufbahnen bezüglich des Montageflansch im Bereich der Absätze sich bedingt radial aufweiten können andererseits jedoch eine Gesamtsteifigkeit des Außenrings erhalten bleibt, welche zuverlässig die beiden Laufbahnen des Außenringes radial abstützt. Besonders bevorzugt ist eine axiale Breite des ersten Absatzes zwischen 20 % und 40 % der Gesamtbreite der Laufbahnen und eine axiale Breite des zweiten Absatzes zwischen zehn und 30 % des zweiten Absatzes. Der Montageflansch ist bevorzugt bezüglich der Gesamtbreite der Laufbahnen asymmetrisch angeordnet, sodass ein axialer Bereich der ersten Laufbahn des Außenringes welcher axial außerhalb des Axialbereichs des Montageflansches liegt größer ist als ein entsprechende axialer Bereich der zweiten Laufbahn des Außenringes der axial außerhalb des Axialbereichs Montageflansches liegt. Mit anderen Worten ausgedrückt ist die axiale Überdeckung der ersten Laufbahn mit dem Montageflansch geringer als die axiale Überdeckung der zweiten Laufbahn.

Eine Weiterbildung des erfindungsgemäßen Wälzlagers sieht vor, dass das Wälzlager weiterhin einen Versteifungsring aufweist, wobei die der Anlagefläche gegenüberliegende zweite Seite des Montageflansches als Anlagefläche für den mit dem Montageflansch verbindbaren Versteifungsring dient, wobei der Versteifungsring einen Außendurchmesser aufweist, welcher größer ist als der Außendurchmesser D des Montageflansches. Durch diese Maßnahme wird erreicht, dass die gesamte Steifigkeit des Außenringes erhöht wird und einem einseitigem. Aufweiten des Außenringes auf der gehäuseabgewandten Seite und damit ein Verkippen desselben entgegengewirkt wird. Besonders bevorzugt ist vorgesehen dass ein zweiter Absatz vorgesehen ist, sodass die axiale Erstreckung des Versteifungsringes mit einem Teilbereich der zweiten Laufbahn sich axial überdeckt. Hierdurch wird eine besonders bauraumoptimierte Anordnung geschaffen. Der Versteifungsring kann in Form einer Scheibe ausgeführt sein, er kann jedoch auch in Form einer L-förmigen Hülse ausgeführt sein wobei am Montageflansch ein zylinderförmiger Abschnitt der L förmigen Hülse angeschraubt wird.

Die Erfindung betrifft weiterhin eine Windenergieanlage welche ein stationäres Gehäuse mit einem daran festgelegten erfindungsgemäßen Wälzlager aufweist. Es ist vorgesehen, dass das Wälzlager hierbei als Rotorlager dient, wobei das Wälzlager als Momentenlager ausgebildet ist. Erfindungsgemäß ist vorgesehen dass das Gehäuse die Gegenanlagefläche aufweist, welche mit der ersten Anlagefläche des Wälzlager im montiertem Zustand in Kontakt steht. Die Anlagefläche und die Gegenanlageflächen können hier direkt in unmittelbaren Kontakt stehen oder aber es kann ein dünnes Zwischenelement, beispielsweise in Form einer Reibung erhöhenden Scheibe, zwischen der Anlagefläche und der Gegenanlagefläche verbaut sein sodass diese mittelbar in Kontakt stehen. Es ist vorgesehen, dass weiterhin ein Versteifungsring vorgesehen ist, welcher mit der zweiten Anlagefläche des Montageflansches in Kontakt steht, wobei der Versteifungsring und der Montageflansch mittels einer gemeinsamen Schraubenverbindung an der Gegenanlagefläche des Gehäuses festgelegt sind. Vorteilhaft hierbei ist, dass über die gemeinsame Schraubenverbindung eine zusätzliche Steifigkeit in das System eingebracht wird.

Eine besonders bevorzugte Ausbildung der Windenergieanlage sieht vor, dass das Wälzlager als zweireihiges Kegelrollenlager oder Tonnenrollenlager in O-Anordnung ausgebildet ist wobei der Außenring einteilig ausgebildet ist und den Montageflansch aufweist und der Innenring als zweiteiliger Innenringen ausgebildet ist. Erfindungsgemäß ist vorgesehen, dass im montiertem Zustand des Wälzlager am Gehäuse, der zylindrische Außenumfangsflächenbereich des Absatzes, welcher dem Gehäuse zugewandt ist und an welchem das Wälzlager am Gehäuse angeschraubt ist, nicht am Gehäuse anliegt. Somit ist das Wälzlager ausschließlich mittels der ersten axialen Anlagefläche am Gehäuse festgelegt, sodass im Bereich des zylindrischen Außenumfangs des Absatzes sich zwischen Gehäuse und Wälzlager kein Passungsrost bilden kann. Weiterhin kann dieser axiale Bereich des Wälzlager gegenüber dem Gehäuse radiale Relativbewegungen ausführen, ohne dass dies zu Radialkräften auf das Gehäuse führt. Nicht erfindungsgemäß kann vorgesehen sein, dass im Bereich des zylindrischen Außenumfangs des Absatzes am Wälzlager oder am Gehäuse Zentrierelemente vorgesehen sind, die dazu dienen bei Montage des Wälzlager die radiale Positionierung des Lagers bezüglich des Gehäuses festzulegen. Die Zentrierelemente, welche den Zentrierdurchmesser vorgeben, können alternativ auch am radialen Außenumfang des Montageflansches, oder an einer korrespondierenden Gegenfläche des Gehäuses angeordnet sein. Diese Zentrierelemente können zum Beispiel in Form von integral ausgeführten Zentriernoppen oder einer umlaufenden Zentrierschulter gebildet sein. Die Zentrierelemente können jedoch auch als separate Bauteile ausgebildet sein. Solche Elemente im Bereich des Absatzes welche einen Zentrierdurchmesser vorgeben, stehen dem Gedanken, dass das Wälzlager lediglich an der ersten axialen Anlagefläche am Gehäuse festgelegt ist, nicht entgegen.

Eine vorteilhafte Weiterbildung sieht entsprechend vor, dass ein Rotor der Windenergieanlage an den beiden Innenringen festgelegt ist. Hierbei ist der Rotor bezüglich der Verbindungsstelle des Wälzlager mit dem Gehäuse auf der gegenüberliegenden axialen Seite des Wälzlager das mit den beiden Innenringen verbunden. Vorzugsweise ist hierbei der Rotor mittels einer gemeinsamen Schraubenverbindung mit beiden Innenringen verbunden. Der Rotor liegt hierbei axial an einer Stirnseite eines der beiden Innenringe an. Erfindungsgemäß weisen die beiden Innenringen Durchgangsöffnungen auf welche dazu dienen die Schraubenverbindung aufzunehmen. Vorzugsweise kann hier entsprechend dem Erfindungsgedanken ebenfalls ein Absatz im Innenringen vorgesehen sein, sodass eine in Richtung der Mitte des Wälzlager zurückversetzte Anlagefläche für den Rotor ausgebildet ist. Der Rotor kann hierbei entweder unmittelbar an einem der Innenringen anliegen oder mittelbar über ein Zwischenelement wie zum Beispiel eine reibungserhöhenden Scheibe anliegen. Entsprechend kann ein solches Zwischenelement auch axial zwischen den beiden Innenringen angeordnet sein. Eine bevorzugte Ausgestaltung sieht vor, dass der Rotor bezüglich des Gehäuses nur über das eine erfindungsgemäße Wälzlager gelagert ist, sodass eine fliegende Lagerung realisiert ist.

Eine besonders bevorzugte Ausgestaltung der Windenergieanlage sieht weiterhin vor, dass auf der dem Rotor gegenüberliegenden Seite an den Innenringen ein zweiter Versteifungsring an der Stirnseite des dem Rotor gegenüberliegenden Innenringes angeordnet ist. Dieser zweite Versteifungsring kann über die gemeinsame Schraubenverbindung welche den Rotor an den Innenringen festlegt, ebenfalls an den Innenringen festgelegt sein. Auch hier kann erfindungsgemäß ein Absatz im entsprechendem Innenringen vorgesehen sein, welcher den Versteifungsring aufnimmt, womit eine besonders kompakte Bauform entsteht. Erfindungsgemäß weist der zweite Versteifungsring einen geringeren Innendurchmesser auf als die beiden Innenringen, womit die radiale Steifigkeit zusätzlich erhöht wird.

Eine alternative Ausgestaltung der Windenergieanlage, welche den erfindungsgemäßen Gedanken verwirklicht sieht vor, dass der Außenring als rotierender Ring ausgebildet ist, welcher mit dem Rotor verbunden ist und die beiden Innenringe mit dem stationären Gehäuse verbunden sind.

Im Folgenden wird die Erfindung anhand einer Figur näher erläutert.

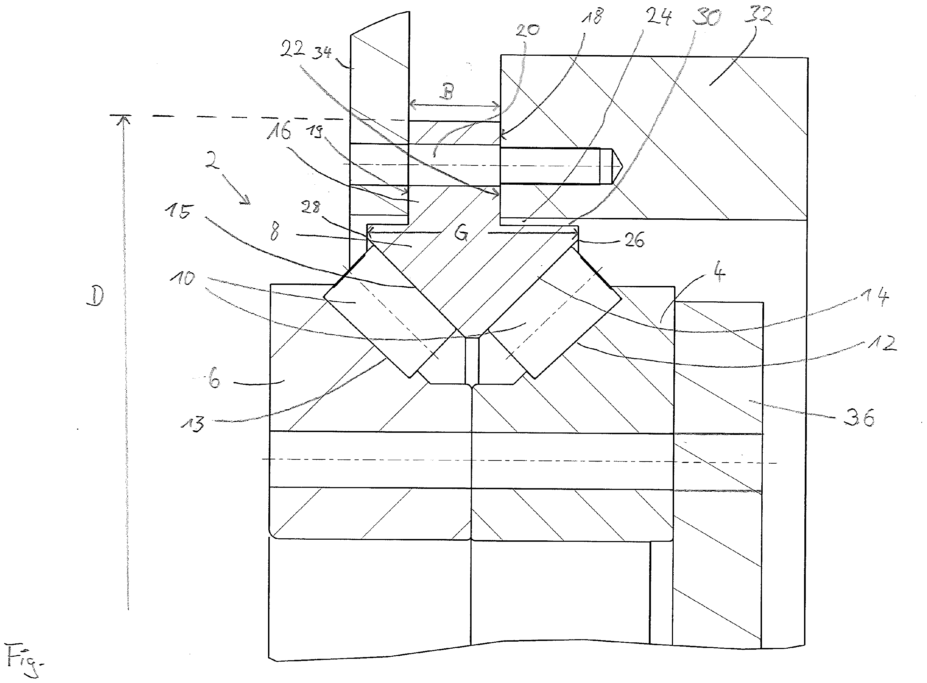

Die Figur zeigt ein Wälzlager 2 welches als zweireihiges Kegelrollenlager ausgebildet ist. Der Außenring 8 ist einteilig ausgebildet und weist eine erste Laufbahn 14 und eine zweite Laufbahn Ziffer 15 auf. Der Innenring besteht aus einem ersten Innenring 4 und einem zweiten Innenring 6. Hierbei weist der erste Innenringen 4 eine erste Laufbahn 12 und der zweite Innenring 6 eine zweite Laufbahn 13 auf. Zwischen den Laufbahnen des Außenringes und den Laufbahnen des Innenrings wälzen sich die beiden Wälzkörperreihen 10 ab. Jede Wälzkörper Reihe 10 besteht hierbei aus in Umfangsrichtung aufeinanderfolgenden Wälzkörpern an welche als kegelstumpfförmige Wälzkörper ausgebildet sind.

Die beiden Laufbahnen des Außenringes sind hierbei unter einem Winkel zur Drehachse des Wälzlager geneigt und weisen jeweils ein äußeres axiales Ende 26,28 auf. Als äußeres axiales Ende der Laufbahn ist hierbei das Ende der unter dem Winkel der Laufbahn ausgebildeten Fläche zu verstehen, welche in der Figur für den Außenring axial außerhalb des tatsächlich von den Wälzkörpern überrollten Flächenbereichs liegt. Die beiden Innenringe sind an ihren beiden äußeren axialen Enden mit jeweils einem Führungsbord für die Wälzkörper ausgebildet, sodass die Gesamtbreite der Laufbahnen des Innenrings sich tatsächlich von einem axialen Ende zum anderen axialen Ende der überrollten Fläche erstreckt.

Der Außenring 8 weist den Montageflansch 16 auf, welcher integral mit dem Außenring ausgebildet ist. Im Montageflansch 16 sind Durchgangsöffnungen 20 angeordnet, welche dazu dienen, den Außenring an einem Maschinenteil festzulegen, im gezeigten Beispiel am Gehäuse 32. Der Außenring ist auf seiner rechten Seite mit einem ersten Absatz 24 ausgebildet, welcher durch den zylindrischen Außenumfangsflächenbereich 30 und die erste axiale Anlagefläche 18 gebildet wird. Im Übergangsbereich von Anlagefläche 18 zum zylindrischen Außenumfangsflächenbereich 30 ist ein nicht dargestellter umlaufender Einstich ausgebildet, welcher dazu dient Spannungen im Bauteil zu minimieren. Zwischen dem Außenumfangsflächenbereich 30 und dem Gehäuseteil 32 ist ein umlaufender Ringspalt ausgebildet, welcher dazu dient, zum einen Passungsrost zu vermeiden und zum anderen eine radiale Ausdehnungsmöglichkeit des Außenringes 8 in diesem Bereich zu ermöglichen. In diesem Ringspalt können nicht dargestellte Zentriernoppen oder -nasen angeordnet sein, welche einen Zentrierdurchmesser darstellen und dazu dienen bei der Montage des Wälzlager am Gehäuse dieses relativ zum Gehäuse radial exakt zu positionieren. Auf der axial gegenüberliegenden Seite des Außenringes 8 ist ein zweiter Absatz angeordnet welcher durch eine zweite sich radial erstreckende, axiale Anlagefläche und eine zweite zylindrische Umfangsfläche dargestellt ist. Im Übergangsbereich vom Montageflansch zur zweiten zylindrischen Umfangsfläche ist ebenfalls ein nicht dargestellter Freistich zur Minimierung von Spannungen ausgebildet. An der zweiten Anlagefläche des Montageflansch des 16 ist ein erster Versteifungsring 34 festgelegt, welcher zu den Durchgangsöffnungen 20 korrespondierende Durchgangsöffnungen aufweist. Mittels einer nicht dargestellten gemeinsamen Schraubenverbindung wird der Versteifungsring 34 und der Außenring 8 am Gehäuse, welches entsprechende mit Innengewinde versehenen Bohrungen aufweist, festgelegt. Am Gehäuse ist hierzu eine Gegenanlagefläche 22 ausgebildet die sich radial erstreckt und zum axialen Positionieren und Festlegen des Außenringes 8 dient. Die beiden Innenring weisen korrespondierende zueinander fluchtende Durchgangsöffnungen auf, welche zur Aufnahme von Schraubenverbindungen dienen, mittels denen Maschinenelemente an einer oder beiden axialen Stirnseiten der Innenringen 4, 6 befestigt werden können. Im gezeigten Beispiel ist an der axialen Stirnseite des ersten innen Rings 4 ein zweiter Versteifungsring 36 angeordnet, welcher im gezeigten Beispiel korrespondierende Durchgangsöffnungen aufweist. Auf der axialen Stirnseite des zweiten Innenrings 6 kann beispielsweise ein nicht dargestellter Rotor einer Windkraftanlage festgelegt werden. Hierzu ist eine gemeinsame Schraubenverbindung vorgesehen, welche die beiden Innenringe 6, 8, den Versteifungsring 36 und den Rotor axial zusammenpresst. Die erfindungsgemäße erste Anlagefläche 18 des Montageflansch 20 ist bezüglich der Gesamtbreite G der Laufbahnen des Außenrings um ca. ein Drittel nach innen versetzt. Hierdurch wird der am Außenring acht wirkende Hebelarm zwischen dem äußeren axialen Ende 28 der Laufbahn 15 des Außenringes 8 und der ersten Anlagefläche 18 um diesen Wert verkürzt, was bei der gezeigten einseitigen Festlegung des Außenrings 8 am Gehäuse 32 bei nach außen gerichteten Radialkräften auf die Laufbahn 15 zu einer im Vergleich zu einer Ausbildung des Außenringes 8 ohne Absätze stark verminderten Verkippung des Außenringes führt. Der zweite Absatz des Außenringes ist um ca. ein Sechstel der Gesamtbreite G nach innen gerückt. Hierdurch wird eine Bauraum optimierte Ausgestaltung des Außenringes 8 ermöglicht.

Insgesamt ist hiermit der benötigte axiale Bauraumbedarf für den Außenring 8 bei Vorsehen eines Versteifungsring es 34 um ca. die Hälfte reduziert gegenüber einer Ausgestaltung des Außenringes 8 ohne Absätze auf beiden Seiten. Hervorzuheben ist, dass die axiale Erstreckung der ersten Laufbahn 14 des Außenringes 8 sich nur noch zu einem geringen Teil mit dem axialen Bereich des Montageflansches 16 überdeckt. Durch den zweiten Absatz auf der Seite des angeordneten Versteifungsring es 34 wird die axiale Überdeckung der zweiten Laufbahn 15 mit dem Montageflansch 16 ebenfalls wesentlich reduziert. Im gezeigten Beispiel wird die axiale Überdeckung des tatsächlich überrollten Bereichs der zweiten Laufbahn 15 um knapp die Hälfte reduziert bei einer bezüglich der Gesamtbreite G der Laufbahnen zurückversetzten Anlagefläche für den Versteifungsring 34 von ca. 20 %.

Der positive Einfluss der erfindungsgemäßen Absätze im Außenring ist besonders bei Lagern ausgeprägt, welche bezüglich der Gesamtbreite G der Laufbahnen einen sehr großen Durchmesser D aufweisen. Beispielsweise seien Dünnringlager genannt, welche bezüglich ihres Durchmessers besonders dünne Ringe in axialer und radialer Richtung aufweisen. Bei dem hier dargestellten doppelreihigen Kegelrollenlager ist mit Bezugsziffer D der Außendurchmesser D des Montageflansches 16 bezeichnet. Bei Verwendung eines solchen Lagers in Windenergieanlagen liegt erfindungsgemäß der Durchmesser D des Montageflansches 16 des Lagers bevorzugt im Bereich größer 200 cm. Das Verhältnis des Außendurchmessers D des Montageflansches zur Gesamtbreite G der Laufbahnen liegt beim gezeigten Ausführungsbeispiel bei ungefähr 15:1

### Bezugszeichenliste

- 2: Wälzlager
- 4: Innenring
- 6: Innenring
- 8: Außenring
- 10: Wälzkörperreihe
- 12: erste Laufbahn des Innenrings
- 13: zweite Laufbahn des Innenrings
- 14: erste Laufbahn des Außenrings
- 15: zweite Laufbahn des Außenrings
- 16: Montageflansch
- 18: erste axiale Anlagefläche
- 20: Durchgangsöffnungen
- 22: Gegenanlagefläche
- 24: erster Absatz
- 26: äußeres axiales Ende der Laufbahn
- 28: äußeres axiales Ende der Laufbahn
- 30: zylindrischer Außenumfangsflächenbereich
- 32: Gehäuse
- 34: erster Versteifungsring
- 36: zweiter Versteifungsring
- B: Breite des Montageflansches
- G: Gesamtbreite der Laufbahnen
- D: Außendurchmesser des Montageflansches

## Patentansprüche

1. Wälzlager (2) mit mindestens einem Innenring (4, 6) und mindestens einem Außenring (8) und zwei Reihen von Wälzkörpern (10), die zwischen einer ersten und einer zweiten Laufbahn (12, 13) des mindestens einen Innenrings (4, 6) und einer ersten und einer zweiten Laufbahn (14, 15) des mindestens einen Außenrings (8) abwälzen, und einem Gehäuse, wobei der Außenring (8) einteilig ausgebildet ist und einen sich radial erstreckenden integralen Montageflansch (16) mit einer sich radial erstreckenden auf der Seite des Gehäuses ersten axialen Anlagefläche (18) aufweist, wobei im Montageflansch sich axial erstreckende Durchgangsöffnungen (20) zum axialen Befestigen des Außenrings an einer Gegenanlagefläche (22) des Gehäuses (32) angeordnet sind, wobei der den Montageflansch (16) aufweisende Außenring (8) auf der Seite der ersten axialen Anlagefläche (18) einen ersten Absatz (24) aufweist, welcher durch die erste axiale Anlagefläche (18) und einem zylindrischen Außenumfangsflächenbereich (30) gebildet wird,
und **dadurch gekennzeichnet, dass**
die erste axiale Anlagefläche (18) des Montageflansches (16) bezüglich einem äußeren axialen Endes (26) der ersten Laufbahn (14) dieses Außenrings (8) axial um 10% bis 50%, insbesondere 20% bis 40%, der Gesamtbreite G der Laufbahnen nach innen in Richtung der zweiten Laufbahn (15) dieses Außenrings (8) versetzt ist, wobei die Gesamtbreite G der Laufbahnen (14, 15) als axialer Abstand der gegenüberliegenden äußeren axialen Enden (26, 28) der Laufbahnen (14, 15) bestimmt ist und wobei das Verhältnis des Außendurchmessers D des Montageflansches zur Gesamtbreite G der Laufbahnen einen Wert zwischen 5 und 25, insbesondere 14 und 16, aufweist und wobei der zylindrische Außenumfangsflächenbereich im montiertem Zustand des Lagers nicht am Gehäuse (32) anliegt.

2. Wälzlager nach Anspruch 1, **dadurch gekennzeichnet, dass** das Wälzlager als zweireihiges Kegelrollenlager oder Tonnenrollenlager in O-Anordnung ausgebildet ist.

3. Wälzlager nach Anspruch 1, **dadurch gekennzeichnet, dass** der Innenring als zweiteiliger Innenring ausgebildet ist, welcher zwei Innenringe (4, 6) aufweist, wobei jeder der Innenringe (4, 6) eine Laufbahn (12, 13) aufweist.

4. Wälzlager nach Anspruch 1, **dadurch gekennzeichnet, dass** der Außenring (8) auf beiden axialen Seiten einen Absatz (24, 30) aufweist, wobei die der Anlagefläche (18) gegenüberliegende zweite Seite (19) des Montageflansches (16) um 10% bis 40% der Gesamtbreite der Laufbahnen nach innen in Richtung der ersten Laufbahn (15) versetzt ist.

5. Wälzlager nach einem der vorhergehenden Ansprüche, **dadurch gekennzeichnet, dass** die axiale Breite B des Montageflansches im Bereich der Durchgangsöffnungen (20) mindestens 30% Gesamtbreite der der Laufbahnen (14, 15) beträgt.

6. Wälzlager nach einem der vorhergehenden Ansprüche, **dadurch gekennzeichnet, dass** das Wälzlager weiterhin einen Versteifungsring (34) aufweist und wobei die der Anlagefläche (18) gegenüberliegende zweite Seite (19) des Montageflansches (16) als Anlagefläche für den mit dem Montageflansch verbindbaren Versteifungsring (34) dient, wobei der Versteifungsring (34) einen Außendurchmesser aufweist, welcher größer ist als der Außendurchmesser D des Montageflansches(16).

7. Windenergieanlage mit einem Wälzlager nach mindestens Anspruch 6, **dadurch gekennzeichnet, dass** das Wälzlager als Rotorlager dient und dass das Gehäuse (32) stationär ist, wobei der Montageflansch (16) und ein Versteifungsring (34) mittels einer gemeinsamen Schraubenverbindung an der Gegenanlagefläche (22) des Gehäuses festgelegt sind.

8. Windenergieanlage nach Anspruch 7, **dadurch gekennzeichnet, dass** ein Rotor der Windenergieanlage mittels einer gemeinsamen Schraubenverbindung anliegend an einem der Innenringe (4,6) an beiden Innenringen (4, 6) festgelegt ist, wobei das Gehäuse und der Rotor auf gegenüberliegenden Seiten des Wälzlagers am Wälzlager festgelegt sind.

9. Windenergieanlage nach Anspruch 9, **dadurch gekennzeichnete, dass** gegenüberliegend des Rotors ein zweiter Versteifungsring (36) am zweiten Innenring (4) anliegend mittels einer Schraubenverbindung festgelegt ist.

## Claims

1. Anti-friction bearing (2) with at least one inner ring (4, 6), at least one outer ring (8) and two rows of rolling bodies (10) which roll between a first and a second raceway (12, 13) of the at least one inner ring (4, 6) and a first and a second raceway (14, 15) of the at least one outer ring (8), and with a housing, the outer ring (8) being configured in one piece and having a radially extending integral mounting flange (16) with a radially extending first axial contact face (18) on the side of the housing, axially extending through openings (20) for axially fastening the outer ring to a complementary contact face (22) of the housing (32) being arranged in the mounting flange, the outer ring (8) which has the mounting flange (16) having a first shoulder (24) on the side of the first axial contact face (18), which first shoulder (24) is formed by way of the first axial contact face (18) and a cylindrical outer circumference face region (30), **characterized in that** the first axial contact face (18) of the mounting flange (16) is offset axially with regard to an outer axial end (26) of the first raceway (14) of the said outer ring (8) by from 10% to 50%, in particular from 20% to 40%, of the overall width G of the raceways inwards in the direction of the second raceway (15) of the said outer ring (8), the overall width G of the raceways (14, 15) being determined as an axial spacing of the opposite outer axial ends (26, 28) of the raceways (14, 15), and the ratio of the external diameter D of the mounting flange to the overall width G of the raceways having a value of between 5 and 25, in particular of between 14 and 16, and the cylindrical outer circumferential face region not bearing against the housing (32) in the mounted state of the bearing.

2. Anti-friction bearing according to Claim 1, **characterized in that** the anti-friction bearing is configured as a two-row tapered roller bearing or barrel-type bearing in an O-arrangement.

3. Anti-friction bearing according to Claim 1, **characterized in that** the inner ring is configured as a two-piece inner ring which has two inner rings (4, 6), each of the inner rings (4, 6) having a raceway (12, 13).

4. Anti-friction bearing according to Claim 1, **characterized in that** the outer ring (8) has a shoulder (24, 30) on the two axial sides, the second side (19) of the mounting flange (16), which second side (19) lies opposite the contact face (18), being offset inwards in the direction of the first raceway (15) by from 10% to 40% of the overall width of the raceways.

5. Anti-friction bearing according to one of the preceding claims, **characterized in that** the axial width B of the mounting flange in the region of the through openings (20) is at least 30% of the overall width of the raceways (14, 15).

6. Anti-friction bearing according to one of the preceding claims, **characterized in that**, furthermore, the anti-friction bearing has a reinforcing ring (34), and the second side (19) of the mounting flange (16), which second side (19) lies opposite the contact face (18), serving as a contact face for the reinforcing ring (34) which can be connected to the mounting flange, the reinforcing ring (34) having an external diameter which is greater than the external diameter D of the mounting flange (16).

7. Wind power plant with an anti-friction bearing according to at least Claim 6, **characterized in that** the anti-friction bearing serves as a rotor bearing, and **in that** the housing (32) is stationary, the mounting flange (16) and a reinforcing ring (34) being fixed on the complementary contact face (22) of the housing by means of a common screw connection.

8. Wind power plant according to Claim 7, **characterized in that** a rotor of the wind power plant is fixed on the two inner rings (4, 6) by means of a common screw connection so as to bear against one of the inner rings (4, 6), the housing and the rotor being fixed on the anti-friction bearing on opposite sides of the anti-friction bearing.

9. Wind power plant according to Claim 9, **characterized in that**, in a manner which lies opposite the rotor, a second reinforcing ring (36) is fixed by means of a screw connection so as to bear against the second inner ring (4) .

## Revendications

1. Palier à roulement (2) comprenant au moins une bague intérieure (4, 6) et au moins une bague extérieure (8) et deux rangées de corps de roulement (10) qui roulent entre un premier et un deuxième chemin de roulement (12, 13) de l'au moins une bague intérieure (4, 6) et un premier et un deuxième chemin de roulement (14, 15) de l'au moins une bague extérieure (8), et un boîtier, la bague extérieure (8) étant réalisée d'une seule pièce et présentant une bride de montage intégrale (16) s'étendant radialement avec une première surface d'appui axiale (18) s'étendant radialement du côté du boîtier, des ouvertures de passage (20) s'étendant axialement, pour la fixation axiale de la bague extérieure à une surface d'appui conjuguée (22) du boîtier (32), étant disposées dans la bride de montage, la bague extérieure (8) présentant la bride de montage (16) présentant, du côté de la première surface d'appui axiale (18), un premier épaulement (24) qui est formé par la première surface d'appui axiale (18) et une région de surface périphérique extérieure cylindrique (30),
et **caractérisé en ce que**
la première surface d'appui axiale (18) de la bride de montage (16) est décalée axialement par rapport à une extrémité axiale extérieure (26) du premier chemin de roulement (14) de cette bague extérieure (8) de 10 % à 50 %, en particulier de 20 % à 40 %, de la largeur totale G des chemins de roulement vers l'intérieur dans la direction du deuxième chemin de roulement (15) de cette bague extérieure (8), la largeur totale G des chemins de roulement (14, 15) étant déterminée comme étant la distance axiale des extrémités axiales extérieures opposées (26, 28) des chemins de roulement (14, 15) et le rapport du diamètre extérieur D de la bride de montage par rapport à la largeur totale G des chemins de roulement ayant une valeur comprise entre 5 et 25, en particulier entre 14 et 16, et la région de surface périphérique extérieure cylindrique, dans l'état monté du palier, ne s'appliquant pas contre le boîtier (32).

2. Palier à roulement selon la revendication 1, **caractérisé en ce que** le palier à roulement est réalisé sous forme de palier à rouleaux coniques à deux rangées ou sous forme de palier à rouleaux sphériques suivant un agencement en O.

3. Palier à roulement selon la revendication 1, **caractérisé en ce que** la bague intérieure est réalisée sous forme de bague intérieure en deux parties qui présente deux bagues intérieures (4, 6), chacune des bagues intérieures (4, 6) présentant un chemin de roulement (12, 13).

4. Palier à roulement selon la revendication 1, **caractérisé en ce que** la bague extérieure (8) présente un épaulement (24, 30) sur les deux côtés axiaux, le deuxième côté (19) de la bride de montage (16) opposé à la surface d'appui (18) étant décalé de 10 % à 40 % de la largeur totale des chemins de roulement vers l'intérieur dans la direction du premier chemin de roulement (15).

5. Palier à roulement selon l'une quelconque des revendications précédentes, **caractérisé en ce que** la largeur axiale B de la bride de montage dans la région des ouvertures de passage (20) vaut au moins 30 % de la largeur totale des chemins de roulement (14, 15).

6. Palier à roulement selon l'une quelconque des revendications précédentes, **caractérisé en ce que** le palier à roulement présente en outre une bague de rigidification (34) et le deuxième côté (19) de la bride de montage (16) opposé à la surface d'appui (18) servant de surface d'appui pour la bague de rigidification (34) pouvant être raccordée à la bride de montage, la bague de rigidification (34) présentant un diamètre extérieur qui est supérieur au diamètre extérieur D de la bride de montage (16).

7. Éolienne comprenant un palier à roulement selon au moins la revendication 6, **caractérisée en ce que** le palier à roulement sert de palier de rotor et **en ce que** le boîtier (32) est stationnaire, la bride de montage (16) et une bague de rigidification (34) étant fixées au moyen d'un raccord vissé commun à la surface d'appui conjuguée (22) du boîtier.

8. Éolienne selon la revendication 7, **caractérisée en ce qu'**un rotor de l'éolienne est fixé aux deux bagues intérieures (4, 6) au moyen d'un raccord vissé commun s'appliquant contre l'une des bagues intérieures (4, 6), le boîtier et le rotor étant fixés au palier à roulement sur des côtés opposés du palier à roulement.

9. Éolienne selon la revendication 9, **caractérisée en ce que** qu'une deuxième bague de rigidification (36) à l'opposé du rotor est fixée en appui contre la deuxième bague intérieure (4) au moyen d'un raccord vissé.
